# EUROPEAN PATENT SPECIFICATION

(11) **EP 3 344 969 B1**
(45) Date of publication and mention of the grant of the patent: **29.01.2020**
(21) Application number: 15766182.8
(22) Date of filing: 01.09.2015
(51) Int. Cl.: G01M 15/05, F02D 41/14, F02D 41/22, G01M 15/09, G01M 15/12, F01P 11/18

(54) **METHOD FOR OPERATING A PISTON ENGINE AND ARRANGEMENT FOR DETECTING FAILURE OF A HEAD GASKET**
VERFAHREN ZUM BETRIEB EINES KOLBENMOTORS UND ANORDNUNG ZUR DETEKTION DER FEHLFUNKTION EINER ZYLINDERKOPFDICHTUNG
PROCÉDÉ POUR FAIRE FONCTIONNER UN MOTEUR À PISTON ET ARRANGEMENT POUR DÉTECTER UNE DÉFAILLANCE D'UN JOINT DE CULASSE

(43) Date of publication of application: 11.07.2018
(73) Proprietor: Wärtsilä Finland Oy, 65100 Vaasa (FI)
(72) Inventor: LASSILA, Jens, FI-65100 Vaasa (FI); STEGAR, Christian, FI-65100 Vaasa (FI); RUDNÄS, Jonas, FI-65100 Vaasa (FI)
(74) Representative: Berggren Oy, Helsinki & Oulu
(86) International application number: PCT/FI2015/050565
(87) International publication number: WO 2017/037328

(56) References cited:
- KR-A- 20140 068 693
- US-A1- 2012 318 040
- US-A1- 2015 177 103

## Description

### Technical field of the invention

The present invention relates to a method for operating a piston engine in accordance with claim 1. The invention also concerns an arrangement for detecting failure of a head gasket of a piston engine as defined in independent claim 9.

### Background of the invention

In piston engines, the upper ends of the cylinders are closed with cylinder heads. In large piston engines, such as ship and power plant engines, each cylinder of the engine is usually provided with an own cylinder head. A gasket, called as a head gasket, is arranged between the cylinder head and the engine block or the upper end of a cylinder sleeve to seal the upper end of the cylinder. A defective head gasket may cause several problems. The cylinders are usually surrounded by cooling water channels, and a defective head gasket may allow the cooling water to leak into the cylinder and the combustion products to leak from the cylinder into a cooling water channel. Leakages reduce the power produced by the faulty cylinder. In the worst case, the leaking cooling water can cause a situation called as a water stroke or hydraulic lock, which means that the amount of water in a cylinder exceeds the compression volume (dead volume), i.e. the volume that is left between the piston, the walls of the cylinder and the cylinder head when the piston is at top dead center. Since water is practically incompressible, the engine can either stall or the engine is damaged in some way to allow the water to flow out of the cylinder. In most cases, significant damage is caused. Therefore, there is a need to detect faulty head gaskets in time to ensure proper functioning of the engine and to avoid damages caused by the leaking cooling water.

A known method for detecting faulty head gaskets is to monitor the pressure of the cooling water. The gases leaking from a cylinder into a cooling water channel raise the pressure of the cooling water and provide an indication of a leaking head gasket. However, there are also several other reasons, which may increase the pressure of the cooling water. For instance, a faulty valve or a thermostat of the cooling system or an increase in the cooling water temperature may cause an increase in the cooling water pressure. Therefore, if faulty head gaskets are detected by monitoring solely the pressure of the cooling water, false alarms can occur.

Leak detection methods and devices for engine head gaskets are known from KR 20140068693, US 2015/0177103 and US 2012/03180040.

### Summary of the invention

An object of the present invention is to provide an improved method for operating a piston engine. The characterizing features of the method according to the invention are given in claim 1. Another object of the invention is to provide an improved arrangement for detecting failure of a head gasket of a piston engine. The characterizing features of the arrangement are given in independent claim 9.

The method according to the invention comprises the steps of monitoring the pressure of a cooling liquid that is used for cooling the cylinders of the engine, monitoring torsional vibrations of the crankshaft of the engine, comparing the measured cooling liquid pressure to a predetermined limit value, comparing the measured torsional vibrations to a predetermined limit value, and in case the measured cooling liquid pressure exceeds its predetermined limit value and the measured torsional vibrations exceed their predetermined limit value, diagnosing a leaking head gasket.

The arrangement according to the invention comprises means for monitoring the pressure of a cooling liquid that is used for cooling the cylinders of the engine, means for monitoring torsional vibrations of the crankshaft of the engine, and a control unit that is configured to compare the measured cooling liquid pressure to a predetermined limit value and the measured torsional vibrations to another predetermined limit value and to diagnose a leaking head gasket in case the measured cooling liquid pressure exceeds its predetermined limit value and the measured torsional vibrations exceed their predetermined limit value.

With the method and the arrangement according to the invention, head gasket failures can be reliably detected. By combining the monitoring of the cooling liquid pressure and the monitoring of the torsional vibrations, the limit values triggering an alarm can be lower. A defective head gasket can thus be detected early, but the likelihood of false alarms is reduced.

According to an embodiment of the invention, the pressure of the cooling liquid is monitored from a high temperature cooling circuit.

According to an embodiment of the invention, the engine is shut down in case a leaking head gasket is diagnosed.

According to an embodiment of the invention, a leaking head gasket is diagnosed only in case the rotation speed of the engine is above a predetermined limit value. The level of torsional vibrations is usually higher during starting of the engine, and therefore the torsional vibrations can be ignored during the start. When the rotation speed of the engine approaches the idle speed, the level of the torsional vibrations is lowered.

According to an embodiment of the invention, the limit value for the cooling liquid pressure is set to be 10-50 percent above the normal operating pressure in the measurement point. If determined as an absolute value, the limit value could be, for instance, 1 to 3 bar above the normal operating pressure in the measurement point.

According to an embodiment of the invention, the limit value for the torsional vibrations is set to be 0.05-0.25 degrees, i.e. 50 to 250 millidegrees above the maximum torsional vibration values measured during steady state operation of the engine. This could be, for instance, 25 to 100 percent above the maximum torsional vibration values measured during steady state operation of the engine.

### Brief description of the drawings

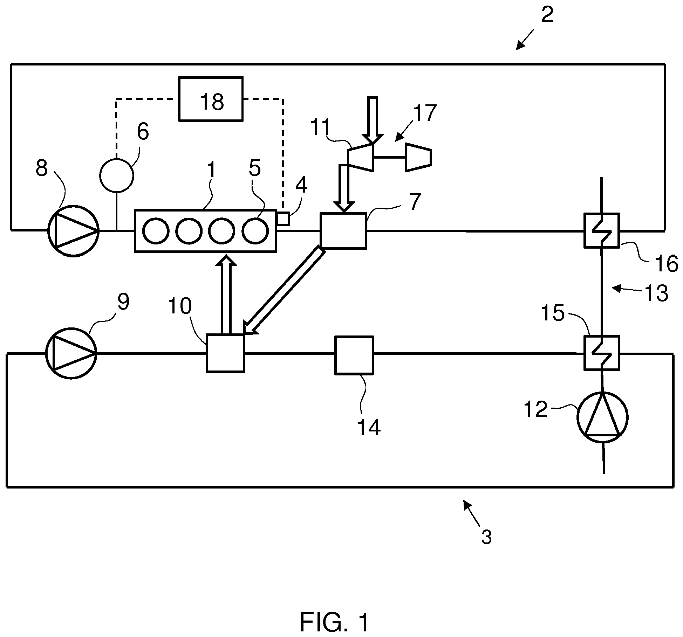

Embodiments of the invention are described below in more detail with reference to the accompanying drawing, which shows schematically a piston engine together with cooling circuits.

### Description of embodiments of the invention

In the figure is shown schematically a cooling system of a piston engine 1. The engine 1 is a large internal combustion engine, such as a main or an auxiliary engine of a ship or an engine that is used at a power plant for producing electricity. In the figure is shown an engine with four cylinders 5, but the engine 1 can comprise any reasonable number of cylinders 5, which are arranged, for instance, in line or in a V-configuration.

The cooling system of the engine 1 comprises two separate cooling circuits 2, 3. One of the cooling circuits 2, 3 is a high temperature cooling circuit 2 and the other one is a low temperature cooling circuit 3, in which the temperature of the cooling medium is lower than in the high temperature cooling circuit 2. Both cooling circuits 2, 3 are closed circuits. Temperature in the high temperature cooling circuit 2 is typically around 90-105 °C and in the low temperature cooling circuit 3 35-50 °C. The cooling medium in the cooling circuits 2, 3 is liquid, such as water. The cooling medium can also contain additives, for example for preventing corrosion. Each of the cooling medium circuits 2, 3 is provided with a pump 8, 9 for circulating the cooling medium. In the embodiment of the figure, the cooling system is further provided with an external cooling circuit 13, which transfers heat away from the high temperature cooling circuit 2 and the low temperature cooling circuit 3. However, it would also be possible to provide the high temperature and the low temperature cooling circuits 2, 3 with heat exchangers, where heat is transferred to cooling air, in which case the external cooling circuit 13 may not be needed. The external cooling circuit 13 is provided with a pump 12 for circulating the cooling medium in the circuit 13. The external cooling circuit 13 also comprises a low temperature heat exchanger 15 for transferring heat from the low temperature cooling circuit 3 to the external cooling circuit 13 and a high temperature heat exchanger 16 for transferring heat from the high temperature cooling circuit 2 to the external cooling circuit 13.

In the high temperature cooling circuit 2, the cooling medium flows from the pump 8 to the engine 1, where heat is transferred from the cylinder liners and the cylinder heads of the engine 1 to the cooling medium. From the engine 1, the cooling medium of the high temperature cooling circuit 2 flows to a first charge air cooler 7. The first charge air cooler 7 is connected to a compressor 11 of a turbocharger 17. In the first charge air cooler 7, heat is transferred from the charge air to the cooling medium of the high temperature cooling circuit 2. If the engine 1 is provided with two-stage turbocharging, the first charge air cooler 7 could also be arranged between the two stages. From the first charge air cooler 7, the cooling medium flows to the high temperature heat exchanger 16, where heat is transferred from the cooling medium of the high temperature cooling circuit 2 to the cooling medium of the external cooling circuit 13. The cooling medium of the high temperature cooling circuit 2 then returns to the pump 8 at a lower temperature.

In the low temperature cooling circuit 3, the cooling medium flows from the pump 9 to a second charge air cooler 10. The second charge air cooler 10 is arranged downstream from the first charge air cooler 7 in the flow direction of the charge air. In the second charge air cooler 10, heat is transferred from the charge air to the cooling medium of the low temperature cooling circuit 3. From the second charge air cooler 10, the charge air is conducted into the intake manifold of the engine 1. The cooling medium is conducted from the second charge air cooler 10 to a lube oil cooler 14, where heat is transferred from the lube oil of the engine 1 to the cooling medium of the low temperature cooling circuit 3. From the lube oil cooler 14, the cooling medium flows to the low temperature heat exchanger 15, where heat is transferred from the cooling medium of the low temperature cooling circuit 3 to the external cooling circuit 13.

Each cylinder 5 of the engine 1 is provided with a cylinder liner, which together with a cylinder head and a piston defines a combustion chamber. Each cylinder 5 of the engine 1 is thus provided with an own cylinder head, which closes one end of the cylinder 5. To seal the joint between the cylinder liner and the cylinder head, a head gasket is arranged between an end surface of the cylinder liner and the cylinder head. The head gasket is an important component, which on the one hand prevents the combustion products from leaking from the cylinder 5, and on the other hand prevents cooling medium leakage into the cylinder 5.

A defective head gasket has several consequences. For instance, since the combustion products can leak out of the cylinder 5, the power output of the affected cylinder 5 is lower than the power output of the other cylinders 5. The uneven power output of the cylinders 5 increases torsional vibrations of the crankshaft of the engine 1. The cylinders 5 of the engine 1 are surrounded by cooling medium channels. Therefore, a defective head gasket allows leaking of the combustion products into the cooling system, which causes pressure increase in the cooling system. The cooling medium can also leak into the cylinder 5 with a defective head gasket. The cooling medium in the cylinder 5 lowers the temperature in that cylinder 5 and can in the worst case cause a water stroke, which can cause significant damage to the engine 1.

To detect failure of a head gasket, the engine 1 comprises means for monitoring the pressure of a cooling liquid of the engine 1. The engine 1 is further provided with means for monitoring torsional vibrations of the crankshaft of the engine 1. The pressure of the cooling liquid and the torsional vibrations can thus be monitored. Limit values are determined for both the cooling liquid pressure and the torsional vibrations. The monitored values can be compared to the limit values, and if both limit values are exceeded, it is an indication of a defective head gasket. When a defective head gasket is detected, an alarm can be triggered or the engine 1 can be automatically shut down to prevent damages.

In the embodiment of the figure, the means for monitoring the pressure of a cooling liquid comprise a pressure sensor 6, which is arranged to measure pressure in a cooling circuit. In the embodiment of the figure, the pressure sensor 6 measures the pressure in the high temperature cooling circuit 2. The pressure sensor 6 is arranged between the pump 8 of the high temperature cooling circuit 2 and the engine 1. During normal operation of the engine 1, the pressure in the high temperature cooling circuit 2 is typically in the range of 4 to 6 bar. Depending on the engine 1, the cooling liquid pressure could also be monitored from a low-temperature cooling circuit 3. If the high temperature cooling circuit 2 is fully separated from the low temperature cooling circuit 3 and only the high temperature cooling circuit 2 is used for cooling the cylinders 5 of the engine 1, a defective head gasket does not affect the pressure in the low temperature cooling circuit 2. In that case, the pressure needs to be monitored from the high temperature cooling circuit 2. The pressure sensor 6 could be anywhere in the high temperature cooling circuit 2.

Torsional vibrations are caused by fluctuating torque and mean variations in the angular velocity of the crankshaft. Torsional vibrations are present even during normal running of the engine, since the torque produced by the combustion is not constant. However, the level of the torsional vibrations is not constant but it is affected by several different factors. For instance, changes in the engine load and misfiring in a cylinder 5 increase torsional vibrations. The level of torsional vibrations is usually expressed in millidegrees (mdeg). Torsional vibrations can be measured, for instance, using shaft encoders attached to the crankshaft or with laser vibrometers. One way of determining torsional vibrations is to use magnetic pickup sensors for measuring the speed of the flywheel of the engine 1 and to use the data to calculate the torsional vibrations. In the embodiment of the figure, the means for monitoring torsional vibrations of the engine 1 comprises a shaft encoder 4.

During operation of the engine 1, the pressure of the cooling liquid and the torsional vibrations of the crankshaft of the engine 1 are continuously monitored. The measurement data is sent to a control unit 18. The control unit 18 compares the measured cooling liquid pressure to a predetermined limit value and the measured torsional vibrations to another predetermined limit value. In case both limit values are exceeded, a defective head gasket is diagnosed. When the control unit 18 diagnoses a defective head gasket, it can either trigger an alarm or automatically shut down the engine 1. The limit value for the cooling liquid pressure can be set to be, for instance, 10 to 50 percent or 1 to 3 bar above the normal operating pressure in the measurement point. For instance, if the pressure of the cooling liquid in the high temperature cooling circuit 2 during the normal operation of the engine 1 is 5 bar, the limit value could be 6 bar.

The normal level of torsional vibrations depends on several factors, such as the number of cylinders 5, rated speed and rated power of the engine 1 and it can also depend on the use of the engine 1. For instance, if the engine 1 is used for driving a generator, the characteristics of the generator and the clutch between the engine 1 and the generator affect the level of the torsional vibrations. Therefore, the limit value for the torsional vibrations needs to be individually determined for each engine type and possibly also for each different application. As an example, the limit value for the torsional vibrations could be 25 to 100 percent or 50 to 250 millidegrees above the maximum value of the torsional vibrations during steady state operation of the engine 1. For instance, if the highest torsional vibration values measured during steady state operation of the engine are 200 mdeg and a broken head gasket typically raises the level above 300 mdeg, the limit value could be 250 mdeg.

During start of the engine 1, the amplitude of the torsional vibrations can be significant, even though the head gaskets are not defective. Therefore, the control unit 18 can be configured to diagnose a defective head gasket only after the engine 1 has reached a certain rotation speed. A limit value is thus set for the rotation speed, and below the predetermined limit value, the torsional vibrations of the engine 1 are ignored. The limit value can be, for instance, the idle speed of the engine +/- 50 rpm.

In addition to defective head gaskets, possible causes for increased cooling medium pressure are faulty thermostats and valves in the cooling system and increase of the cooling medium temperature. Torsional vibrations increase for example when a variable intake valve closing function is switched on or when the engine load suddenly increases. There are thus several factors increasing either the pressure of the cooling medium or the torsional vibrations, but most of the factors affect only one of the monitored parameters. Therefore, when both the cooling medium temperature and the torsional vibrations increase, it is likely that the increase is caused by a defective head gasket.

Since both the cooling medium pressure and the torsional vibrations are monitored and used for diagnosing a defective head gasket, the respective limit values can be set lower than in a case where only one parameter is monitored. A defective head gasket can thus be detected earlier. Also, the use of two parameters reduces the likelihood of false alarms.

It will be appreciated by a person skilled in the art that the invention is not limited to the embodiments described above, but may vary within the scope of the appended claims. For instance, although an engine with two cooling circuits is shown in the drawing, the engine could also be provided with a single cooling circuit.

## Claims

1. A method for operating a piston engine (1), the method comprising the steps of
- monitoring the pressure of a cooling liquid that is used for cooling the cylinders (5) of the engine (1),
- monitoring torsional vibrations of the crankshaft of the engine (1),
- comparing the measured cooling liquid pressure to a predetermined limit value,
- comparing the measured torsional vibrations to a predetermined limit value, and
- in case the measured cooling liquid pressure exceeds its predetermined limit value and the measured torsional vibrations exceed their predetermined limit value, diagnosing a leaking head gasket.

2. A method according to claim 1, wherein the pressure of the cooling liquid is monitored from a high temperature cooling circuit (2).

3. A method according to claim 1 or 2, wherein the engine (1) is shut down in case a leaking head gasket is diagnosed.

4. A method according to any of the preceding claims, wherein a leaking head gasket is diagnosed only in case the rotation speed of the engine (1) is above a predetermined limit value.

5. A method according to any of the preceding claims, wherein the limit value for the cooling liquid pressure is set to be 10-50 percent above the normal operating pressure in the measurement point.

6. A method according to any of the preceding claims, wherein the limit value for the cooling liquid pressure is set to be 1-3 bar above the normal operating pressure in the measurement point.

7. A method according to any of the preceding claims, wherein the limit value for the torsional vibrations is set to be 0.05-0.25 degrees above the maximum torsional vibration values measured during steady state operation of the engine (1).

8. A method according to any of the preceding claims, wherein the limit value for the torsional vibrations is set to be 25-100 percent above the maximum torsional vibration values measured during steady state operation of the engine (1).

9. An arrangement for detecting failure of a head gasket of a piston engine (1), the arrangement comprising
- means (6) for monitoring the pressure of a cooling liquid that is used for cooling the cylinders (5) of the engine (1),
- means (4) for monitoring torsional vibrations of the crankshaft of the engine (1), and
- a control unit (18) that is configured to compare the measured cooling liquid pressure to a predetermined limit value and the measured torsional vibrations to another predetermined limit value and to diagnose a leaking head gasket in case the measured cooling liquid pressure exceeds its predetermined limit value and the measured torsional vibrations exceed their predetermined limit value.

10. An arrangement according to claim 9, wherein the means (5) for monitoring the pressure of the cooling liquid are arranged to monitor the pressure in a high temperature cooling circuit (2).

## Patentansprüche

1. Verfahren zum Betrieb eines Kolbenmotors (1), wobei das Verfahren die Schritte umfasst:
- Überwachung des Drucks einer Kühlflüssigkeit, die zum Kühlen des Zylinders (5) des Motors (1) eingesetzt wird,
- Überwachung der Torsionsschwingungen der Kurbelwelle des Motors (1),
- Vergleichen des gemessenen Kühlflüssigkeitsdrucks mit einem vorgegebenen Grenzwert,
- Vergleichen der gemessenen Torsionsschwingungen mit einem vorgegebenen Grenzwert und,
- falls der gemessene Kühlflüssigkeitsdruck seinen vorgegebenen Grenzwert überschreitet und die gemessenen Torsionsschwingungen ihren vorgegebenen Grenzwert überschreiten, Diagnose einer undichten Kopfdichtung.

2. Verfahren nach Anspruch 1, bei dem der Druck der Kühlflüssigkeit von einem Hochtemperatur-Kühlkreislauf (2) überwacht wird.

3. Verfahren nach Anspruch 1 oder 2, wobei der Motor (1) abgeschaltet wird, falls eine undichte Kopfdichtung diagnostiziert wird.

4. Verfahren nach einem der vorhergehenden Ansprüche, wobei eine undichte Kopfdichtung nur dann diagnostiziert wird, wenn die Drehzahl des Motors (1) oberhalb eines vorgegebenen Grenzwertes liegt.

5. Verfahren nach einem der vorhergehenden Ansprüche, wobei der Grenzwert für den Kühlflüssigkeitsdruck auf 10-50 Prozent über dem normalen Betriebsdruck am Messpunkt eingestellt wird.

6. Verfahren nach einem der vorhergehenden Ansprüche, wobei der Grenzwert für den Kühlflüssigkeitsdruck im Messpunkt 1-3 bar über dem normalen Betriebsdruck eingestellt wird.

7. Verfahren nach einem der vorhergehenden Ansprüche, wobei der Grenzwert für die Torsionsschwingungen auf 0,05 bis 0,25 Grad über den maximalen Torsionsschwingungswerten eingestellt wird, die während des stationären Betriebs des Motors (1) gemessen werden.

8. Verfahren nach einem der vorhergehenden Ansprüche, wobei der Grenzwert für die Torsionsschwingungen so eingestellt wird, dass er 25 bis 100 Prozent über den maximalen Torsionsschwingungswerten liegt, die während des stationären Betriebs des Motors (1) gemessen werden.

9. Anordnung zum Erkennen einer Fehlfunktion einer Kopfdichtung eines Kolbenmotors (1), wobei die Anordnung umfasst:
- Mittel (6) zur Überwachung des Drucks einer Kühlflüssigkeit, die zum Kühlen der Zylinder (5) des Motors (1) verwendet wird,
- Mittel (4) zur Überwachung der Torsionsschwingungen der Kurbelwelle des Motors (1) und
- eine Steuereinheit (18), die zum Vergleichen des gemessenen Kühlflüssigkeitsdruckes mit einem vorgegebenen Grenzwert und der gemessenen Torsionsschwingungen mit einem anderen vorgegebenen Grenzwert konfiguriert ist und die eine undichte Kopfdichtung diagnostiziert, falls der gemessene Kühlflüssigkeitsdruck seinen vorgegebenen Grenzwert überschreitet und die gemessenen Torsionsschwingungen ihren vorgegebenen Grenzwert überschreiten.

10. Anordnung nach Anspruch 9, wobei die Mittel (5) zur Überwachung des Drucks der Kühlflüssigkeit angeordnet sind, um den Druck in einem Hochtemperaturkühlkreislauf (2) zu überwachen.

## Revendications

1. Procédé pour faire fonctionner un moteur à piston (1), le procédé comprenant les étapes de
- surveiller la pression d'un liquide de refroidissement qui est utilisé pour refroidir les cylindres (5) du moteur (1),
- surveiller les vibrations de torsion du vilebrequin du moteur (1),
- comparer la pression mesurée du liquide de refroidissement à une valeur limite prédéterminée,
- comparer les vibrations de torsion mesurées à une valeur limite prédéterminée, et
- au cas où la pression mesurée du liquide de refroidissement dépasse sa valeur limite prédéterminée et les vibrations de torsion mesurées dépassent leur valeur limite prédéterminée, diagnostiquer une fuite de joint de culasse.

2. Procédé selon la revendication 1, dans lequel la pression du liquide de refroidissement est surveillée à partir d'un circuit de refroidissement haute température (2).

3. Procédé selon la revendication 1 ou 2, dans lequel le moteur (1) est coupé au cas où une fuite de joint de culasse est détectée.

4. Procédé selon l'une quelconque des revendications précédentes, dans lequel une fuite de joint de culasse est diagnostiquée uniquement dans le cas où la vitesse de rotation du moteur (1) est au-dessus d'une valeur limite prédéterminée.

5. Procédé selon l'une quelconque des revendications précédentes, dans lequel la valeur limite pour la pression du liquide de refroidissement est réglée pour être de 10-50 pourcents au-dessus de la pression de fonctionnement normale dans le point de mesure.

6. Procédé selon l'une quelconque des revendications précédentes, dans lequel la valeur limite pour la pression du liquide de refroidissement est réglée pour être de 1-3 pourcents au-dessus de la pression de fonctionnement normale dans le point de mesure.

7. Procédé selon l'une quelconque des revendications précédentes, dans lequel la valeur limite pour les vibrations de torsion est réglée pour être de 0,05-0,25 degrés au-dessus des valeurs de vibration de torsion maximales mesurées durant le fonctionnement en régime stable du moteur (1).

8. Procédé selon l'une quelconque des revendications précédentes, dans lequel la valeur limite pour les vibrations de torsion est réglée pour être de 25-100 pourcents au-dessus des valeurs de vibration de torsion maximales mesurées durant le fonctionnement en régime stable du moteur (1).

9. Arrangement pour détecter la défaillance d'un joint de culasse d'un moteur à piston (1), l'arrangement comprenant
- un moyen (6) pour surveiller la pression d'un liquide de refroidissement qui est utilisé pour refroidir les cylindres (5) du moteur (1),
- un moyen (4) pour surveiller les vibrations de torsion du vilebrequin du moteur (1), et
- une unité de commande (18) qui est configurée pour comparer la pression mesurée du liquide de refroidissement à une valeur limite prédéterminée et les vibrations de torsion mesurées à une autre valeur limitée prédéterminée et pour diagnostiquer une fuite de joint de culasse au cas où la pression mesurée du liquide de refroidissement dépasse sa valeur limite prédéterminée et les vibrations de torsion mesurées dépassent leur valeur limite prédéterminée.

10. Arrangement selon la revendication 9, dans lequel le moyen (5) pour surveiller la pression du liquide de refroidissement est agencé pour surveiller la pression dans un circuit de refroidissement haute température (2) .
